# EUROPEAN PATENT APPLICATION

(11) **EP 2 837 287 A1**
(43) Date of publication of application: **18.02.2015**
(21) Application number: 13180495.7
(22) Date of filing: 15.08.2013
(51) Int. Cl.: A01N 43/653, A01P 21/00, A01P 3/00

(54) **Use of prothioconazole for increasing root growth of Brassicaceae**

(71) Applicant: Bayer CropScience AG, 40789 Monheim am Rhein (DE)
(72) Inventor: The designation of the inventor has not yet been filed
(74) Representative: BIP Patents

(57) **Abstract**

The present invention relates to a new use of prothioconazole for increasing root growth of crop plants belonging to the plant family *Brassicaceae,* in particular oilseed rape or winter oilseed rape as well as a new method of treating *Brassicacea* plants or plant parts with a composition comprising prothioconazole for increasing root growth of the plants.

## Description

The present invention relates to a new use of prothioconazole for increasing root growth of crop plants belonging to the plant family *Brassicaceae* (hereinafter referred to as *Brassicaceae* plant), such as oilseed rape, in particular winter oilseed rape as well as a new method of treating such plants or plant parts with a composition comprising prothioconazole for increasing root growth of the *Brassicaceae* plants.

In particular for winter oilseed rape it is important to provide appropriate conditions for overwintering and for vigorous regrowth of the plant in spring. Improved root growth is one of the most important features for such appropriate overwintering and vigorous regrowth in spring.

In the past several attempts to improve the root growth of oilseed rape, in particular winter oilseed rape, have been described. According to WO 2002/083732 A2 a mixture of specific quaternized bioregulatory active ingredients, in particular N, N-dimethylpiperidinium chloride (mepiquat chloride) or chlormequat chloride, in combination with triazole derivatives, in particular metconazole, improves the root growth of several plants including winter oilseed rape. WO 02/083732 A2 discloses the fact that by applying said mixture, the vegetative growth of the shoot of plants is inhibited while at the same time the root growth is increased. In addition, WO 02/083732 A2 describes various advantages that derive from the use of the claimed mixtures such as an increase in the standing ability of crops which are prone to lodging under adverse weather conditions, increased frost hardness, denser planting of crop plants so that higher yields based on the acreage can be achieved, shortened or extended developmental stages or else an acceleration or delay in maturity of the harvested plant parts pre- or postharvest. A particular subject matter of the invention disclosed by WO 02/083732 is the use of said mixture for improving root growth. The purpose of this use is predominantly the development of an increased number of root branches, longer roots and/or an increased root surface area. This improves the water and nutrient uptake capacity of the plants. In autumn, a larger storage root is formed in particular in winter oilseed rape to allow for more intense new growth in spring.

Triazoles are an important class of active ingredients in the pesticide field. As ergosterol biosynthesis inhibitors, they are primarily employed as fungicides. In addition, several of the triazoles which, as such, have fungicidal activity are occasionally also described as having plant-growth regulatory properties (see, for example, EP 0 040 345 A1; EP 0 057 357 A1). Thus, paclobutrazole and uniconazole inhibit gibberellin biosynthesis and thus cell elongation and cell division. WO-A 04/023875 relates to agents containing carboxylic acid and based on active ingredients which have a bioregulatory action and are from the class of triazoles, and to the use of the same as bioregulators in plant cultivation.

The use of a mixture of prothioconazole, trifloxystrobin and azoxystrobin for improving plant growth by reducing the incidence of fungal infections is described in WO-A 2012/021214. However, the application concentrates on this particular mixture of a triazole and two strobilurines and using the combined spectrum of activity of those active ingredients, since the active ingredients azoxystrobin, trifloxystrobin, and prothioconazole have different, but potentially complementary characteristics. Additionally, the effects according to WO-A 2012/021214 are reported for grains, such as wheat, barley, rye, oats, rice, corn and sorghum; and legumes, such as beans, lentils, peas and soybeans only. The application is silent about any effect on *Brassicaceae,* in particular oilseed rape or winter oilseed rape.

There is a constant need to improve the conditions for overwintering and vigorous regrowth of winter oilseed rape in spring. Increased root growth is known an important feature of the respective oilseed rape plant for such improved conditions for overwintering and vigorous regrowth in spring.

Therefore, the object of the present invention was to provide a method of increasing root growth of *Brassicaceae* plants, in particular of oilseed rape, preferably of winter oilseed rape. A further object of the present invention was to provide improved conditions for overwintering and vigorous regrowth of winter oilseed rape in spring.

Surprisingly it has been found that this object is achieved by using prothioconazole for increasing root growth of *Brassicaceae* plants, on particular of oilseed rape, preferably of winter oilseed rape.

Therefore, the present invention relates to the use of prothioconazole for increasing root growth of *Brassicaceae* plants. Preferably the present invention relates to the use of prothioconazole for increasing root growth of oilseed rape. More preferably the present invention relates to the use of prothioconazole for increasing root growth of winter oilseed rape.

Prothioconazole (CAS Registry No. 178928-70-6), having the chemical name 2-[2-(1-chlorocyclopropyl)-3-(2-chlorophenyl)-2-hydroxypropyl]-1,2-dihydro-3H-1,2,4-triazole-3-thione and its manufacturing process is described in WO-A 96/16048.

Prothioconazole (having the chemical name 2-[2-(1-chlorocyclopropyl)-3-(2-chlorophenyl)-2-hydroxy-propyl]-1,2-dihydro-3H-1,2,4-triazole-3-thione) can be present in the "thiono" form of the formula (I) 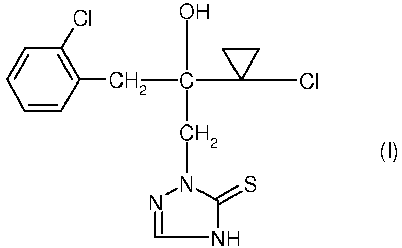 or in the tautomeric "mercapto" form of the formula

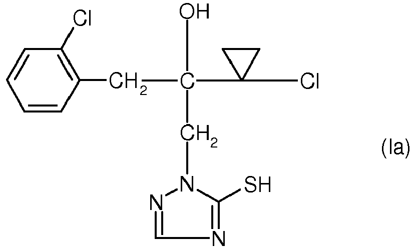

By using the common name prothioconazole both tautomeric forms are covered.

Prothioconazole is well known [cf. The Pesticide Manual, Fifteenth Edition, C.D.S. Tomlin (Ed.), 2009, BCPC Publications] as fungicide. Triazole fungicides including the fungicide Prothioconazole are well known as sterol biosynthesis inhibitors, see FRAC classification (FRAC website http://www/frac.info/), in particular subgroup G1. It is in particular known that triazole fungicides including the fungicide prothioconazole are inhibitors of fungal sterol C14 demethylase cyp51, which is a cytochrome P450 monooxygenase.

However, so far the use of prothioconazole for improvement of root growth of *Brassicaceae* plants, in particular of oilseed rape, preferably of winter oilseed rape, has never been reported before.

Preferred crop plants belonging to the plant family *Brassicaceae* according to the present invention are *Brassica* plants.

Preferred crop species, cultivars and varieties belonging to the plant genus *Brassica* according to the present invention are
- *Brassica carinata:* Abyssinian mustard or Abyssinian cabbage
- *Brassica elongata:* elongated mustard
- *Brassica fruticulosa:* Mediterranean cabbage
- *Brassica juncea:* Indian mustard, brown and leaf mustards, Sarepta mustard
- *Brassica napus* comprising winter rapeseed, summer rapeseed, rutabaga *(Brassica napus subsp rapifera* swede/Swedish turnip/swede turnip)
- *Brassica narinosa:* broadbeaked mustard
- *Brassica nigra:* black mustard
- *Brassica oleracea* comprising cultivars like kale, cabbage, broccoli, cauliflower, kai-lan, Brussels sprouts, kohlrabi
- *Brassica perviridis:* tender green, mustard spinach
- *Brassica rapa* (syn *B. campestris*) comprising Chinese cabbage, turnip, rapini, komatsuna
- *Brassica rupestris:* brown mustard
- *Brassica septiceps:* seventop turnip
- *Brassica tournefortii:* Asian mustard
- *Brassica alba* (syn *Sinapis alba,* white mustard)
- Canola varieties

To use the name canola, an oilseed plant must meet the following internationally regulated standard:
"Seeds of the genus Brassica (*Brassica napus, Brassica rapa or Brassica juncea*) from which the oil shall contain less than 2% erucic acid in its fatty acid profile and the solid component shall contain less than 30 micromoles of any one or any mixture of 3-butenyl glucosinolate, 4-pentenyl glucosinolate, 2-hydroxy-3 butenyl glucosinolate, and 2-hydroxy-4-pentenyl glucosinolate per gram of air-dry, oil-free solid."

Further preferred crop plants belonging to the plant family *Brassicaceae* according to the present invention are horseradish *(Armoracia rusticana), radish* ( *e.g. Raphanus sativus* var. *oleiformis, Raphanus sativus L.* var. *sativus.*

More preferred *Brassica* plants according to the present invention are oilseed rape plants *(Brassica napus),* more preferred winter oilseed rape plants *(Brassica napus).*

For the use of prothioconazole according to the present invention prothioconazole is preferably used in combination with at least one further agrochemically active triazole compound.

Preferably the further agrochemically active triazole compound(s) is/are selected from azaconazole, bitertanol, bromuconazole, cyproconazole, diclobutrazole, difenoconazole, diniconazole, diniconazole-M, epoxiconazole, etaconazole, fenbuconazole, fluquinconazole, flusilazole, flutriafol, furconazole, furconazolecis, hexaconazole, imibenconazole, ipconazole, metconazole, myclobutanil, paclobutrazol, penconazole, propiconazole, prothioconazol, quinconazole, simeconazole, tebuconazole, tetraconazole, triadimefon, triadimenol, triticonazole, uniconazole, uniconazole-p, viniconazole, voriconazole and 1-(4-chlorophenyl)-2-(1H-1,2,4-triazol-1-yl)cycloheptanol. More preferably metconazole is excluded from the selection of further agrochemically active triazole compounds mentioned before.

According to a preferred embodiment of the present invention a combination of prothioconazole with tebuconazole is used.

The increase of root growth of *Brassicaceae* plants, in particular of oilseed rape, preferably of winter oilseed rape by using prothioconazole optionally in combination with at least one further agrochemically active triazole compound is the more surprising than so far only very particular combinations of active ingredients are described and or used, e.g. combinations of triazoles and the specific quaternized bioregulatory active ingredients mentioned above or of triazoles and strobilurines.

In one embodiment of the present invention prothioconazole optionally in combination with at least one further agrochemically active triazole compound is used in absence of any strobilurine.

By using at least one further agrochemically active triazole compound the active ingredients prothioconazole and the further triazole compound are preferably used in a weight ratio of 1:0.1 to 1:10, more preferably in a weight ratio of 1:0.5 to 1:5. By using tebuconazole as further agrochemically active triazole compound, the active ingredients prothioconazole and tebuconazole are preferably used in a weight ratio of 1:0.1 to 1:10, more preferably in a weight ratio of 1:0.5 to 1:5, most preferably in a weight ratio of 1:0.5 to 1:3.

Increasing root growth according to the present application can encompass development of an increased number of root branches, longer roots and/or an increased root surface area. Such increased root growth can be determined by measuring the average root dry weight. For determination of the average root dry weight according to the present invention e.g. the entire plants are carefully removed out of the substrate or soil without impacting the root system. Plants are then placed in an oven at e.g. 50 °Celsius and 30 % relative humidity for three days (72 h) enabling afterwards a determination of the root dry weight. The average root dry weight is obtained as the average of at least three determined root dry weights according to this determination method.

Therefore, by using prothioconazole according to the present invention preferably the average root dry weight of oilseed rape is increased.

Preferably the average root dry weight of oilseed rape is increased by at least 20%, preferably by at least 25%, more preferably by at least 30% compared to the average root dry weight of untreated oilseed rape. Preferably such increase of the average root dry weight can be determined more than 3 weeks after treatment of the plant with the fungicide composition comprising prothioconazole, more preferably more than 4 weeks after treatment of the plant with the fungicide composition comprising prothioconazole.

The present invention further relates to the above mentioned use of prothioconazole, wherein the Brassicaceae plant, in particular the oilseed rape plant is a transgenic plant.

Genetically modified organisms are for example plants or seeds. Genetically modified plants are plants whose genome has, stably integrated, a certain heterologous gene coding for a certain protein. Here, "heterologous gene" is meant to be understood as a gene which confers novel agronomical properties on the transformed plant, or a gene which improves the agronomical quality of the modified plant.

As already mentioned above, it is possible to treat all plants and their parts according to the invention. In a preferred embodiment, wild plant species and plant cultivars, or those obtained by conventional biological breeding methods, such as crossing or protoplast fusion, and parts thereof, are treated. In a further preferred embodiment, transgenic plants and plant cultivars obtained by genetic engineering methods, if appropriate in combination with conventional methods (genetically modified organisms), and parts thereof are treated. The terms "parts", "parts of plants" and "plant parts" have been explained above. Particularly preferably, plants of the plant cultivars which are in each case commercially available or in use are treated according to the invention.

Examples of cytoplasmic male sterility (CMS) were for instance described in *Brassica* species (WO 92/05251, WO 95/09910, WO 98/27806, WO 05/002324, WO 06/021972 and US 6,229,072). However, genetic determinants for male sterility can also be located in the nuclear genome. Male sterile plants can also be obtained by plant biotechnology methods such as genetic engineering. A particularly useful means of obtaining male-sterile plants is described in WO 89/10396 in which, for example, a ribonuclease such as barnase is selectively expressed in the tapetum cells in the stamens. Fertility can then be restored by expression in the tapetum cells of a ribonuclease inhibitor such as barstar (e.g. WO 91/02069).

Herbicide-resistant plants are for example glyphosate-tolerant plants, i.e. plants made tolerant to the herbicide glyphosate or salts thereof. Plants can be made tolerant to glyphosate through different means. For example, glyphosate-tolerant plants can be obtained by transforming the plant with a gene encoding the enzyme 5-enolpyruvylshikimate-3-phosphate synthase (EPSPS). Examples of such EPSPS genes are the AroA gene (mutant CT7) of the bacterium *Salmonella typhimurium (*Science 1983, 221, 370-371), the CP4 gene of the bacterium *Agrobacterium sp. (*Curr. Topics Plant Physiol. 1992, 7, 139-145), the genes encoding a Petunia EPSPS *(*Science 1986, 233, 478-481), a Tomato EPSPS (J. Biol. Chem. 1988, 263, 4280-4289), or an Eleusine EPSPS (WO 01/66704). It can also be a mutated EPSPS as described in for example EP 0837944, WO 00/66746, WO 00/66747 or WO 02/26995, WO 11/000498. Glyphosate-tolerant plants can also be obtained by expressing a gene that encodes a glyphosate oxido-reductase enzyme as described in US 5,776,760 and US 5,463,175. Glyphosate-tolerant plants can also be obtained by expressing a gene that encodes a glyphosate acetyl transferase enzyme as described in for example WO 02/036782, WO 03/092360, WO 05/012515 and WO 07/024782. Glyphosate-tolerant plants can also be obtained by selecting plants containing naturally-occurring mutations of the above-mentioned genes, as described in for example WO 01/024615 or WO 03/013226. Plants expressing EPSPS genes that confer glyphosate tolerance are described in e.g. U.S. Patent Applications 11/517,991, 10/739,610, 12/139,408, 12/352,532, 11/312,866, 11/315,678, 12/421,292, 11/400,598, 11/651,752, 11/681,285, 11/605,824, 12/468,205, 11/760,570, 11/762,526, 11/769,327, 11/769,255, 11/943801 or 12/362,774. Plants comprising other genes that confer glyphosate tolerance, such as decarboxylase genes, are described in e.g. U.S. Patent Applications 11/588,811,11/185,342,12/364,724,11/185,560 or 12/423,926.

Other herbicide resistant plants are for example plants that are made tolerant to herbicides inhibiting the enzyme glutamine synthase, such as bialaphos, phosphinothricin or glufosinate. Such plants can be obtained by expressing an enzyme detoxifying the herbicide or a mutant glutamine synthase enzyme that is resistant to inhibition, e.g. described in U.S. Patent Application 11/760,602. One such efficient detoxifying enzyme is an enzyme encoding a phosphinothricin acetyltransferase (such as the bar or pat protein from *Streptomyces* species). Plants expressing an exogenous phosphinothricin acetyltransferase are for example described in U.S. Patents 5,561,236; 5,648,477; 5,646,024; 5,273,894; 5,637,489; 5,276,268; 5,739,082; 5,908,810 and 7,112,665.

Still further herbicide resistant plants are plants that are made tolerant to acetolactate synthase (ALS) inhibitors. Known ALS-inhibitors include, for example, sulfonylurea, imidazolinone, triazolopyrimidines, pyrimidinyoxy-(thio)benzoates, and/or sulfonylaminocarbonyltriazolinone herbicides. Different mutations in the ALS enzyme (also known as acetohydroxyacid synthase, AHAS) are known to confer tolerance to different herbicides and groups of herbicides, as described for example in Tranel and Wright (Weed Science 2002, 50, 700-712), but also, in U.S. Patents 5,605,011, 5,378,824, 5,141,870, and 5,013,659. The production of sulfonylurea-tolerant plants and imidazolinone-tolerant plants is described in U.S. Patents 5,605,011; 5,013,659; 5,141,870; 5,767,361; 5,731,180; 5,304,732; 4,761,373; 5,331,107; 5,928,937; and 5,378,824; and WO 96/33270. Other imidazolinone-tolerant plants are also described in for example WO 04/040012, WO 04/106529, WO 05/020673, WO 05/093093, WO 06/007373, WO 06/015376, WO 06/024351, and WO 06/060634. Further sulfonylurea- and imidazolinonetolerant plants are also described in for example WO 07/024782, WO 2011/076345, WO 2012058223, WO 2012150335 and U.S. Patent Application 61/288958. Of particular interest are varieties of winter rapeseed being resistant against ALS-inhibitors (tradename Clearfield, Clierfield Vantiga).

Plants of the genus *Brassica* (that can be obtained by plant biotechnology methods such as genetic engineering) which may also be treated according to the invention are plants with altered oil profile characteristics. Such plants can be obtained by genetic transformation, or by selection of plants contain a mutation imparting such altered oil profile characteristics and include:
a) Plants, such as oilseed rape plants, producing oil having a high oleic acid content as described e.g. in US 5,969,169, US 5,840,946 or US 6,323,392 or US 6,063,947
b) Plants such as oilseed rape plants, producing oil having a low linolenic acid content as described in US 6,270,828, US 6,169,190, US 5,965,755 or WO 11/060946
c) Plant such as oilseed rape plants, producing oil having a low level of saturated fatty acids as described e.g. in US 5,434,283 or U.S. Patent Application 12/668303
d) Plants such as oilseed rape plants, producing oil having an alter glucosinolate content as described in WO 2012075426.

Plants of the genus *Brassica* (that can be obtained by plant biotechnology methods such as genetic engineering) which may also be treated according to the invention are plants with altered seed shattering characteristics. Such plants can be obtained by genetic transformation, or by selection of plants contain a mutation imparting such altered seed shattering characteristics and include plants such as oilseed rape plants with delayed or reduced seed shattering as described in WO 2009/068313 and WO 2010/006732, WO 2012090499.

Varieties of winter rapeseed being resistant against ALS-inhibitors are e.g. such varieties available under tradename Clearfield, Clierfield Vantiga.

The Prothioconazole used according to the present invention is generally applied in form of a composition comprising at least Prothioconazole as mentioned above. Preferably the fungicidal composition comprises agriculturally acceptable additives, solvents, carriers, surfactants, or extenders.

Suitable organic solvents include all polar and non-polar organic solvents usually employed for formulation purposes of such compositions. Preferable the solvents are selected from ketones, e.g. methyl-isobutyl-ketone and cyclohexanone, amides, e.g. dimethyl formamide and alkanecarboxylic acid amides, e.g. N,N-dimethyl decaneamide and N,N-dimethyl octanamide, furthermore cyclic solvents, e.g. N-methyl-pyrrolidone, N-octyl-pyrrolidone, N-dodecyl-pyrrolidone, N-octyl-caprolactame, N-dodecyl-caprolactame and butyrolactone, furthermore strong polar solvents, e.g. dimethylsulfoxide, and aromatic hydrocarbons, e.g. xylol, Solvesso™, mineral oils, e.g. white spirit, petroleum, alkyl benzenes and spindle oil, also esters, e.g. propyleneglycol-monomethylether acetate, adipic acid dibutylester, acetic acid hexylester, acetic acid heptylester, citric acid tri-*n*-butylester and phthalic acid di-*n*-butylester, and also alkohols, e.g. benzyl alcohol and 1-methoxy-2-propanol.

According to the invention, a carrier is a natural or synthetic, organic or inorganic substance with which the active ingredients are mixed or combined for better applicability, in particular for application to plants or plant parts. The carrier, which may be solid or liquid, is generally inert and should be suitable for use in agriculture.

Useful solid or liquid carriers include: for example ammonium salts and natural rock dusts, such as kaolins, clays, talc, chalk, quartz, attapulgite, montmorillonite or diatomaceous earth, and synthetic rock dusts, such as finely divided silica, alumina and natural or synthetic silicates, resins, waxes, solid fertilizers, water, alcohols, especially butanol, organic solvents, mineral and vegetable oils, and derivatives thereof. Mixtures of such carriers can likewise be used.

Suitable solid filler and carrier include inorganic particles, e.g. carbonates, silikates, sulphates and oxides with an average particle size of between 0.005 and 20 µm, preferably of between 0.02 to 10 µm, for example ammonium sulphate, ammonium phosphate, urea, calcium carbonate, calcium sulphate, magnesium sulphate, magnesium oxide, aluminium oxide, silicium dioxide, so-called fine-particle silica, silica gels, natural or synthetic silicates, and alumosilicates and plant products like cereal flour, wood powder/sawdust and cellulose powder.

Useful solid carriers for granules include: for example crushed and fractionated natural rocks such as calcite, marble, pumice, sepiolite, dolomite, and synthetic granules of inorganic and organic meals, and also granules of organic material such as sawdust, coconut shells, maize cobs and tobacco stalks.

Useful liquefied gaseous extenders or carriers are those liquids which are gaseous at standard temperature and under standard pressure, for example aerosol propellants such as halohydrocarbons, and also butane, propane, nitrogen and carbon dioxide.

In the compositions, it is possible to use tackifiers such as carboxymethylcellulose, and natural and synthetic polymers in the form of powders, granules or latices, such as gum arabic, polyvinyl alcohol and polyvinyl acetate, or else natural phospholipids, such as cephalins and lecithins, and synthetic phospholipids. Further additives may be mineral and vegetable oils.

If the extender used is water, it is also possible to employ, for example, organic solvents as auxiliary solvents. Useful liquid solvents are essentially: aromatics such as xylene, toluene or alkylnaphthalenes, chlorinated aromatics and chlorinated aliphatic hydrocarbons such as chlorobenzenes, chloroethylenes or dichloromethane, aliphatic hydrocarbons such as cyclohexane or paraffins, for example mineral oil fractions, mineral and vegetable oils, alcohols such as butanol or glycol and their ethers and esters, ketones such as acetone, methyl ethyl ketone, methyl isobutyl ketone or cyclohexanone, strongly polar solvents such as dimethylformamide and dimethyl sulphoxide, and also water.

Suitable surfactants (adjuvants, emulsifiers, dispersants, protective colloids, wetting agent and adhesive) include all common ionic and non-ionic substances, for example ethoxylated nonylphenols, polyalkylene glycolether of linear or branched alcohols, reaction products of alkyl phenols with ethylene oxide and/or propylene oxide, reaction products of fatty acid amines with ethylene oxide and/or propylene oxide, furthermore fattic acid esters, alkyl sulfonates, alkyl sulphates, alkyl ethersulphates, alkyl etherphosphates, arylsulphate, ethoxylated arylalkylphenols, e.g. tristyryl-phenol-ethoxylates, furthermore ethoxylated and propoxylated arylalkylphenols like sulphated or phosphated arylalkylphenol-ethoxylates and -ethoxy- and -propoxylates. Further examples are natural and synthetic, water soluble polymers, e.g. lignosulphonates, gelatine, gum arabic, phospholipides, starch, hydrophobic modified starch and cellulose derivatives, in particular cellulose ester and cellulose ether, further polyvinyl alcohol, polyvinyl acetate, polyvinyl pyrrolidone, polyacrylic acid, polymethacrylic acid and co-polymerisates of (meth)acrylic acid and (meth)acrylic acid esters, and further co-polymerisates of methacrylic acid and methacrylic acid esters which are neutralized with alkalimetal hydroxide and also condensation products of optionally substituted naphthalene sulfonic acid salts with formaldehyde. The presence of a surfactant is necessary if one of the active ingredients and/or one of the inert carriers is insoluble in water and when application is effected in water. The proportion of surfactants is between 5 and 40 per cent by weight of the inventive composition.

It is possible to use dyes such as inorganic pigments, for example iron oxide, titanium oxide and Prussian Blue, and organic dyes such as alizarin dyes, azo dyes and metal phthalocyanine dyes, and trace nutrients such as salts of iron, manganese, boron, copper, cobalt, molybdenum and zinc.

Antifoams which may be present in the compositions include e.g. silicone emulsions, longchain alcohols, fattiy acids and their salts as well as fluoroorganic substances and mixtures therof.

Examples of thickeners are polysaccharides, e.g. xanthan gum or veegum, silicates, e.g. attapulgite, bentonite as well as fine-particle silica.

If appropriate, it is also possible for other additional components to be present, for example protective colloids, binders, adhesives, thickeners, thixotropic substances, penetrants, stabilizers, sequestrants, complexing agents. In general, the active ingredients can be combined with any solid or liquid additive commonly used for formulation purposes.

The active ingredients or compositions can be used as such or, depending on their particular physical and/or chemical properties, in the form of their formulations or the use forms prepared therefrom, such as aerosols, capsule suspensions, cold-fogging concentrates, warm-fogging concentrates, encapsulated granules, fine granules, flowable concentrates, ready-to-use solutions, dustable powders, emulsifiable concentrates, oil-in-water emulsions, water-in-oil emulsions, macrogranules, microgranules, oil-dispersible powders, oil-miscible flowable concentrates, oil-miscible liquids, gas (under pressure), gas generating product, foams, pastes, suspension concentrates, suspoemulsion concentrates, soluble concentrates, suspensions, wettable powders, soluble powders, dusts and granules, water-soluble and water-dispersible granules or tablets, water-soluble and water-dispersible powders, wettable powders, natural products and synthetic substances impregnated with active ingredient, and also microencapsulations in polymeric substances and in coating materials, and also ULV cold-fogging and warm-fogging formulations.

The compositions include not only formulations which are already ready for use and can be applied with a suitable apparatus to the plant, but also commercial concentrates which have to be diluted with water prior to use. Customary and preferred applications are for example dilution in water and subsequent spraying of the resulting spray liquor, application after dilution in oil, direct application without dilution.

The compositions and formulations generally contain between 0.05 and 99 % by weight, 0.01 and 98 % by weight, preferably between 0.1 and 95 % by weight, more preferably between 0.5 and 90 % of active ingredient, most preferably between 10 and 70 % by weight.

In a preferred embodiment of the present invention the composition comprising prothioconazole comprises prothioconazole and optionally one or more further agrochemically active triazole compound in an overall amount from 10 g/l to 800 g/l, preferably from 50 g/l to 500 g/l, more preferably from 50 g/l to 300 g/l.

The formulations mentioned can be prepared in a manner known per se, for example by mixing the active ingredients with at least one customary extender, solvent or diluent, adjuvant, emulsifier, dispersant, and/or binder or fixative, wetting agent, water repellent, if appropriate desiccants and UV stabilizers and, if appropriate, dyes and pigments, antifoams, preservatives, inorganic and organic thickeners, adhesives, gibberellins and also further processing auxiliaries and also water. Depending on the formulation type to be prepared further processing steps are necessary, e.g. wet grinding, dry grinding and granulation.

A further aspect of the present invention is a method of treating *Brassicaceae* plants or plant parts, in particular oilseed rape plants or plant parts, preferably winter oilseed rape plants or plant parts, with a composition comprising prothioconazole for increasing root growth of the plant.

Preferably the composition comprising prothioconazole comprises at least one further agrochemically active triazole compound. Suitable agrochemically active triazole compound according to the invention are those mentioned above.

More preferably the composition comprising prothioconazole also comprises tebuconazole.

In one embodiment of the present invention the composition comprising prothioconazole does not comprise any strobilurine.

Preferred weight ratios for prothioconazole and the further triazole compound, in particular tebuconazole, are mentioned above.

The application of the composition comprising prothioconazole is preferably applied to the *Brassicaceae* plants or plant parts at particular growth stages of the plant. The term "growth stage" refers to the growth stages as defined by the BBCH Codes in "Growth stages of mono- and dicotyledonous plants", 2nd edition 2001, edited by Uwe Meier from the Federal Biological Research Centre for Agriculture and Forestry. The BBCH codes are a well-established system for a uniform coding of phonologically similar growth stages of all mono- and dicotyledonous plant species. The abbreviation BBCH derives from "Biologische Bundesanstalt, Bundessortenamt und Chemische Industrie".

Some of these BBCH growth stages and BBCH codes for oilseed rape plants are indicated in the following.
Growth stage 1: Leaf development1
   BBCH 10 - Cotyledons completely unfolded
   BBCH 11 - First leaf unfolded
   BBCH 12 - 2nd leaf unfolded
   BBCH 13 - 3rd leaf unfolded
   BBCH 14 - 18 Stages continuous till ... (4 - 8th leaf unfolded)
   BBCH 19 - 9 or more leaves unfolded
Growth stage 2: Formation of side shoots
   BBCH 20 - No side shoots
   BBCH 21 - Beginning of side shoot development: first side shoot detectable
   BBCH 22 - 2nd side shoots detectable
   BBCH 23 - 3rd side shoots detectable
   BBCH 24 - 4th side shoots detectable
   BBCH 25 - 5th side shoots detectable
   BBCH 26 - 28 - Stages continuous till ... (6 - 8 side shoots detectable)
   BBCH 29 End of side shoot development: 9 or more side shoots detectable
Growth stage 3: Stem elongation2
   BBCH 30 - Beginning of stem elongation: no internodes ("rosette")
   BBCH 31 - 1 visibly extended internode
   BBCH 32 - 2nd visibly extended internode
   BBCH 33 - 3rd visibly extended internode
   BBCH 39 - 9 or more visibly extended internodes

Preferably in the method of treating *Brassicaceae* plants or plant parts, in particular oilseed rape plants or plant parts, preferably winter oilseed rape plants or plant parts with a composition comprising prothioconazole according to the invention the composition comprising prothioconazole is applied to the plants or plant parts at a growth stage defined by BBCH codes from BBCH 10 (Cotyledons completely unfolded) to BBCH 31 (1 visibly extended internode), preferably from BBCH 11 (First leaf unfolded) to BBCH 25 (fifth side shoots detectable), more preferably from BBCH 12 (second leaf unfolded) to BBCH 20 (No side shoots).

In particular by treating winter oilseed rape plants or plant parts according to the present invention treatment in such particular growth stages show several advantages. Improvement of root growth can also induce stunted growth of the shoot of plants and/or increase frost hardness. The increase of root growth additionally can improve water and nutrient uptake capacity of the plants. By one or more of those advantages conditions for overwintering and vigorous regrowth in spring can be improved preferably for winter oilseed rape.

In a preferred embodiment of the present invention the composition comprising prothioconazole is applied to the oilseed rape plants or plant parts in an application rate from 0.1 l/ha to 10.0 l/ha, preferably from 0.3 l/ha to 5.0 l/ha, more preferably from 0.5 l/ha to 2 l/ha, wherein the composition comprises prothioconazole and optionally one or more further agrochemically active triazole compound in an overall amount from 10 g/l to 800 g/l, preferably from 50 g/l to 500 g/l, more preferably from 50 g/l to 300 g/l.

The inventive treatment of the plants and plant parts with the active ingredients or compositions is effected directly or by action on their surroundings, habitat or storage space by the customary treatment methods, for example by dipping, spraying, atomizing, irrigating, evaporating, dusting, fogging, broadcasting, foaming, painting, spreading-on, watering (drenching) or drip irrigating. It is also possible to deploy the active ingredients by the ultra-low volume method or to inject the active ingredient preparation or the active ingredient itself into the soil.

The use of prothioconazole for increasing root growth of oilseed rape according to the present invention as well as the method of treating oilseed rape plants or plant parts with a composition comprising prothioconazole for increasing root growth of the oilseed rape plant show several advantages. Improvement of root growth does not only lead to development of an increased number of root branches, longer roots and/or an increased root surface area reflected in an increased average root dry weight, but can also induce stunted growth of the shoot of plants, increase the standing ability of the plants and/or increase frost hardness. The increase of root growth additionally can improve water and nutrient uptake capacity of the plants. By one or more of those advantages conditions for overwintering and vigorous regrowth of winter oilseed rape in spring can be improved.

A further aspect of the present invention is a method of treating *Brassicaceae* plants or plant parts, in particular oilseed rape plants or plant parts, preferably winter oilseed rape plants or plant parts, with a composition comprising prothioconazole for increasing root growth of the plant, wherein said prothioconazole increases root growth of the plant.

A further aspect of the present invention is a method of treating *Brassicaceae* plants or plant parts, in particular oilseed rape plants or plant parts, preferably winter oilseed rape plants or plant parts, with a composition comprising prothioconazole and at least one further agrochemically active triazole compound for increasing root growth of the plant, wherein the combination of said prothioconazole with at least one further agrochemically active triazole compound, preferably with tebuconazole, increases root growth of the plant.

A further aspect of the present invention is a method of treating *Brassicaceae* plants or plant parts, in particular oilseed rape plants or plant parts, preferably winter oilseed rape plants or plant parts, with a composition comprising prothioconazole for increasing root growth of the plant, wherein said prothioconazole increases root growth of the plant when the composition comprising prothioconazole is applied to the plants or plant parts at a growth stage defined by BBCH codes from BBCH 10 (Cotyledons completely unfolded) to BBCH 31 (1st visibly extended internode), preferably from BBCH 11 (First leaf unfolded) to BBCH 25 (5th side shoot detectable), more preferably from BBCH 12 (2nd leaf unfolded) to BBCH 20 (No side shoots).

A further aspect of the present invention is a method of treating *Brassicaceae* plants or plant parts, in particular oilseed rape plants or plant parts, preferably winter oilseed rape plants or plant parts, with a composition comprising prothioconazole at least one further agrochemically active triazole compound for increasing root growth of the plant, wherein said prothioconazole in combination with at least one further agrochemically active triazole compound, preferably tebuconazole, increases root growth of the plant when the composition comprising prothioconazole and at least one further agrochemically active triazole compound is applied to the plants or plant parts at a growth stage defined by BBCH codes from BBCH 10 (Cotyledons completely unfolded) to BBCH 31 (1st visibly extended internode), preferably from BBCH 11 (First leaf unfolded) to BBCH 25 (5th side shoot detectable), more preferably from BBCH 12 (2nd leaf unfolded) to BBCH 20 (No side shoots).

The invention is illustrated by - but not limited to - the examples below.

### Examples

Untreated seeds of the oilseed rape cultivar "Titan" were first cultivated in small pots containing as substrate Lecaton®. Oilseed rape plants were continuously fertilized on demand using a Hoagland solution whose composition is described in table 1. The Hoagland solution was applied via drench application. The environmental conditions in the greenhouse were adjusted to 15 °Celsius and 80 % relative humidity.

**Table 1: Composition of Hoagland solution used to fertilize oilseed rape plants**

| **Nutrient salt** | **Concentration [g/L]** |
|---|---|
| MnCl₂ x 4 H₂O | 1,81 |
| KH₂PO₄ | 136,1 |
| ZnSO₄ x 7 H₂O | 0,22 |
| Na₂B₄O₇ | 4,52 |
| CuSO₄ x 5 H₂O | 0,08 |
| Na₂MoO₄ x 2 H₂O | 0,03 |
| MgSO₄ x 7 H₂O | 246,5 |
| Ca(NO₃)₂ x 4 H₂O | 236,2 |
| KNO₃ | 101 |
| Fetrilon 13 % | 20 |

Five weeks after sowing, seedlings having reached similar growth stage were carefully transferred to 30 L hobbocks. Three seedlings were placed in each hobbock containing Lecaton®, as well. Three replicates (=hobbocks) per treatment were prepared resulting in total number of nine plants/treatment.

The fungicide application was performed at growth stage BBCH 15-16, placing the 30 L hobbocks in a semi-automated spraying cabinet. The treatment was performed with a horizontally adjusted spray boom using a water volume of 300 L/ha. The distance between spray nozzle and topmost leaf was adjusted to 50 cm. Table 2 describes the fungicides investigated. Untreated plants (treatment 1) received a water treatment of 300 L/ha. After fungicide application, growing conditions in the greenhouse were changed to 10° Celsius and 80 % relative humidity.

**Table 2: Treatments**

| Treatment | Active ingredient | g a.i./ha | Formulation | L/ha |
|---|---|---|---|---|
| 1 | Untreated | - | - | - |
| 2 | Prothioconazole + Tebuconazole | 96 + 192 | 240EC | 1,2 |
| 3 | Metconazole + Mepiquatchlorid | 42 + 294 | 240SL | 1,4 |

Five weeks after fungicide treatment, entire plants were carefully removed out of the substrate without impacting the root and shoot system. Plants were placed in an oven at 50 °Celsius and 30 % relative humidity for three days (72 h) enabling afterwards a determination of the shoot and root dry weight. The results are displayed in table 3.

**Table 3: Influence of fungicide treatments on shoot and root dry weight of oilseed rape plants**

| Treatment | Replicate | Root dry weight [g] | Average root dry weight [g] | Shoot dry weight [g] | Average shoot dry weight [g] |
|---|---|---|---|---|---|
| 1 | A | 17,9 | 18,4 | 49,85 | 47,8 |
| | B | 19,01 | | 43,37 | |
| | C | 18,18 | | 50,2 | |
| 2 | A | 24,69 | 26,9 | 44,57 | 56 |
| | B | 28,88 | | 67,33 | |
| | C | 27,24 | | 56,06 | |
| 3 | A | 19,87 | 18,5 | 48,31 | 43,1 |
| | B | 20,56 | | 48,76 | |
| | C | 15,15 | | 32,12 | |

The results displayed in table 3 show that surprisingly by using the prothioconazole containing composition according to the invention the average root dry weight was increased by 46.2 % (compared to the root dry weight of untreated plants), while using the composition according to the prior art containing metconazole mepiquatchlorid the average root dry weight was only increased by 0.5 % (compared to the root dry weight of untreated plants).

## Claims

1. Use of prothioconazole for increasing root growth of *Brassicaceae* plants.

2. Use according to claim 1, wherein prothioconazole is used in combination with at least one further agrochemically active triazole compound.

3. Use according to claim 1 or 2, wherein prothioconazole is used in combination with tebuconazole.

4. Use according to any of claims 1 to 3, wherein the *Brassicaceae* plant is a *Brassica* plant, preferably oilseed rape, more preferably winter oilseed rape.

5. Use according to any of claims 1 to 4, wherein the average root dry weight of the *Brassicaceae* plant is increased.

6. Use according to claim 5, wherein the average root dry weight of the *Brassicaceae* plant is increased by at least 20%, preferably by at least 25%, more preferably by at least 30% compared to the average root dry weight of untreated *Brassicaceae* plants.

7. Use according to any of claims 1 to 6, wherein prothioconazole is applied to the *Brassicaceae* plants at a at a growth stage defined by BBCH codes from BBCH 10 to BBCH 31, preferably from BBCH 11 to BBCH 25, more preferably from BBCH 12 to BBCH 20.

8. Method of treating *Brassicaceae* plants or plant parts with a composition comprising prothioconazole for increasing root growth of the *Brassicaceae* plant.

9. Method according to claim 8, wherein the composition comprising prothioconazole comprises at least one further agrochemically active triazole compound.

10. Method according to claim 8 or 9, wherein the composition comprising prothioconazole also comprises tebuconazole.

11. Method according to any of claims 8 to 10, wherein the *Brassicaceae* plants or plant parts are oilseed rape plants or plant parts, preferably winter oilseed rape plants or plant parts.

12. Method according to any of claims 8 to 11, wherein the compositions comprising prothioconazole is applied to the plants or plant parts at a growth stage defined by BBCH codes from BBCH 10 to BBCH 31, preferably from BBCH 11 to BBCH 25, more preferably from BBCH 12 to BBCH 20.

13. Method according to any of claims 8 to 12, wherein the average root dry weight of treated *Brassicaceae* plants is increased by at least 20%, preferably by at least 25%, more preferably by at least 30% compared to the average root dry weight of untreated *Brassicaceae* plants.

14. Method according to any of claims 8 to 13, wherein the composition comprising prothioconazole is applied to the *Brassicaceae* plants or plant parts in an application rate from 0.1 l/ha to 10.0 l/ha, preferably from 0.3 l/ha to 5.0 l/ha, more preferably from 0.5 l/ha to 2 l/ha, wherein the composition comprises prothioconazole and optionally one or more further agrochemically active triazole compound in an overall amount from 10 g/l to 800 g/l, preferably from 50 g/l to 500 g/l, more preferably from 50 g/l to 300 g/l.
